# EUROPEAN PATENT SPECIFICATION

(11) **EP 4 259 356 B1**
(45) Date of publication and mention of the grant of the patent: **29.01.2025**
(21) Application number: 21840314.5
(22) Date of filing: 13.12.2021
(51) Int. Cl.: B21D 5/12, B21D 26/033, B21D 37/16, C21D 9/50, C21D 11/00, C21D 8/10, B21C 37/08, C21D 1/26, C22C 21/00, B21D 35/00, C21D 1/34, C21D 1/42, C21D 1/52

(54) **ROLL FORMING SYSTEM WITH HEAT TREATMENT AND ASSOCIATED METHODS**
ROLLFORMSYSTEM MIT WÄRMEBEHANDLUNG UND ZUGEHÖRIGE VERFAHREN
SYSTÈME DE PROFILAGE AVEC TRAITEMENT THERMIQUE ET PROCÉDÉS ASSOCIÉS

(30) Priority: 14.12.2020 US 202063199202 P
(43) Date of publication of application: 18.10.2023
(60) Divisional application: 24213005.2
(73) Proprietor: Novelis, Inc., Atlanta, GA 30326 (US)
(72) Inventor: ROY, Debdutta, Kennesaw, Georgia 30144 (US); GAENSBAUER, David Anthony, Kennesaw, Georgia 30144 (US); HO, John Min, Kennesaw, Georgia 30144 (US); PEARSON, Cullen, Kennesaw, Georgia 30144 (US); RAIS, Adolfo, Kennesaw, Georgia 30144 (US); TALLA, Rajasekhar, Kennesaw, Georgia 30144 (US); KIDWELL, Carolyn Grace, Kennesaw, Georgia 30144 (US); IYER, Natasha, Kennesaw, Georgia 30144 (US)
(74) Representative: Weickmann & Weickmann PartmbB
(86) International application number: PCT/US2021/063009
(87) International publication number: WO 2022/132610

(56) References cited:
- EP-A1- 1 138 407
- WO-A1-2017/106970
- WO-A1-2018/064136
- US-A1- 2003 192 160
- US-A1- 2012 085 753
- US-A1- 2018 230 583
- US-A1- 2019 283 100

## Description

### CROSS-REFERENCE TO RELATED APPLICATIONS

This application claims the benefit of and priority to U.S. Provisional Application No. 63/199,202, filed December 14, 2020.

### FIELD OF THE INVENTION

This application relates to systems and methods for forming a final hollow body from a metal strip, and, more particularly, to roll forming systems and methods for forming a final hollow body from a metal strip.

### BACKGROUND

Certain industries, including but not limited to the automotive industry, may utilize hollow or tubular metal structures for various applications. One method of forming such structures is by extruding a tubular structure and further shaping the tubular structure into a final tubular structure via hydroforming. An alternative method of forming such structures is roll forming a metal sheet followed by seam welding to form a welded tubular structure, and hydroforming the welded tubular structure into the final tubular structure. Traditionally, the integrity of the weld (or seam) of the welded tubular structure has limited the ability of the welded tubular structures to be hydroformed. In particular, roll forming results in significant strain hardening in the material, which adversely affects the material's formability. In addition, seam welding can result in grain refinement based strengthening in the seam region along with the formation of micro-cracks through localized incipient melting and cause a gradient in the strength/hardness profile across the weld. As such, the decreased formability of the weld region, as well as the gradient of the strength/hardness profile across the weld, limit the weld's ability to maintain its integrity during hydroforming.

US 2019/0283100 A1 is directed to a method for producing an at least partially hardened profiled component, in which method a semi-finished product, after being heated up to a hardening temperature, is shaped in a forming tool by means of hydroforming or by means of pressing so as to produce the profiled component which, after being shaped in the forming tool, is hardened by means of quenching. US 2003/0192160 A1 is directed to a process for forming low cost aluminum alloy hydroforms, in particular low cost hydroformed tubes suitable for assembly as automotive vehicle structures. EP 1138407 A1 is directed to a method of manufacturing a shaped and hollow structural member via a hydroforming process, comprising the steps of subsequently: providing an extruded or welded tubular or hollow intermediate metal product, placing the intermediate metal product in a die for hydroforming, hydroforming the intermediate metal product to a hydroformed structural member by the introduction of a heated pressure medium having a temperature in the range of 50 to 300°C.

### SUMMARY

The subject matter of the present invention is defined in the appended claims. According to the invention, a forming system for forming a final hollow body from a metal strip as defined in claim 1 includes a forming station, a joining station, an inline heater, and a hydroforming station. The forming station receives the metal strip in a planar configuration and bends the metal strip to a desired cross-section and such that longitudinal edges of the metal strip are abutting. The forming station comprises at least one roller, and the at least one roller may optionally bend the metal strip in a lateral direction. The joining station is downstream from the forming station and welds the abutting longitudinal edges together as a seam region to form an intermediate hollow body. The inline heater is downstream from the joining station and selectively heats at least the seam region of the intermediate hollow body. The hydroforming station is downstream from the inline heater and hydroforms the intermediate hollow body to the final hollow body.

According to the invention, a method of forming a final hollow body from a metal strip as defined in claim 7 includes roll forming the metal strip to a desired cross-section and such that longitudinal edges of the metal strip are abutting, and welding the longitudinal edges together as a seam region and to form an intermediate hollow body. The method includes heating at least the seam region of the intermediate hollow body and hydroforming the intermediate hollow body to the final hollow body.

### BRIEF DESCRIPTION OF THE DRAWINGS

The features and components of the following figures are illustrated to emphasize the general principles of the present disclosure. Corresponding features and components throughout the figures can be designated by matching reference characters for the sake of consistency and clarity.
FIG. 1 is a block diagram of components of a forming system according to embodiments.
FIG. 2 illustrates a roll forming system of a forming system according to embodiments.
FIG. 3 illustrates an intermediate hollow body before hydroforming and a final hollow body after hydroforming according to embodiments.
FIG. 4 illustrates an inline heater for a roll forming system according to embodiments.
FIG. 5 illustrates another inline heater for a roll forming system according to embodiments.
FIG. 6 illustrates another inline heater for a roll forming system according to embodiments.
FIG. 7 illustrates an intermediate hollow body formed from a roll forming system of a forming system according to embodiments.
FIG. 8 is a chart illustrating residual stresses in intermediate hollow bodies according to embodiments.
FIG. 9 is a chart illustrating flaring displacements in intermediate hollow bodies according to embodiments.
FIG. 10 is a chart illustrating yield stresses and maximum tensile stresses in intermediate hollow bodies according to embodiments.
FIG. 11 is a chart illustrating average hardness in intermediate hollow bodies according to embodiments.
FIG. 12 is a hardness heat map of an intermediate hollow body formed by roll forming system without heat treatment according to embodiments.
FIG. 13 is a hardness heat map of an intermediate body formed by a roll forming system with heat treatment according to embodiments.
FIG. 14 is a chart illustrating in-service yield strength and ultimate tensile strength in final hollow bodies according to embodiments.
FIG. 15 illustrates flaring in a hollow body formed without heat treatment according to embodiments.
FIG. 16 illustrates flaring in a hollow body formed by a roll forming system with heat treatment according to embodiments.
FIG. 17 is a chart illustrating flaring displacement in hollow bodies according to embodiments.
FIG. 18 is a photograph of a microstructure of a hollow body according to embodiments.
FIG. 19 is a block diagram of components of a forming system according to embodiments.
FIG. 20 is a chart illustrating in-service strength of hollow bodies according to embodiments.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described. Directional references such as "up," "down," "top," "bottom," "left," "right," "front," and "back," among others, are intended to refer to the orientation as illustrated and described in the figure (or figures) to which the components and directions are referencing.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g. 1 to 6.1, and ending with a maximum value of 10 or less, e.g., 5.5 to 10.

Aspects and features of the systems and methods described herein may be used with any suitable metal substrate, and may be especially useful with aluminum or aluminum alloys. Specifically, desirable results can be achieved for alloys such as 1xxx series, 2xxx series, 3xxx series, 4xxx series, 5xxx series, 6xxx series, 7xxx series, or 8xxx series aluminum alloys. For an understanding of the number designation system most commonly used in naming and identifying aluminum and its alloys, see "International Alloy Designations and Chemical Composition Limits for Wrought Aluminum and Wrought Aluminum Alloys" or "Registration Record of Aluminum Association Alloy Designations and Chemical Compositions Limits for Aluminum Alloys in the Form of Castings and Ingot," both published by The Aluminum Association.

Described herein are forming systems and methods for forming a final hollow body from a metal strip. The forming system includes a roll forming system that shapes and forms the metal strip from a planar configuration to an intermediate hollow body, and a hydroforming system that shapes the intermediate hollow body to the final hollow body. The roll forming system includes an inline heater that heats at least a seam region of the intermediate hollow body prior to hydroforming. The inline heater may be various suitable devices or combinations of devices for heating at least the seam region. As some non-limiting examples, the inline heater may include one or more of a rotating magnet, an induction inline heater, a gas-powered inline heater, an infrared inline heater, an electric furnace, combinations thereof, or other suitable devices as desired. In some cases, the inline heater may be a rapid inline heater that rapidly heats the intermediate hollow body or portions thereof. In certain aspects, heating at least the seam region of the intermediate hollow body may provide stress relief to the intermediate hollow body and/or may allow for improved control of the distribution of material properties in the seam region (including, but not limited to, homogenizing material properties across the seam region). In some embodiments, heating the intermediate hollow body may soften or decrease the hardness of at least the seam region of the intermediate hollow body prior to hydroforming. Conventional wisdom suggests decreasing the hardness (and thus the strength) of the seam region would be undesirable as this softening would adversely impact the final in-service strength of the material after hydroforming and hence its crash performance. The inventors have discovered that an annealing temperature regime wherein softening from this post weld rapid annealing allows the material to better adapt to and thus withstand to forces that it is subjected to during hydroforming but counter-intuitively, does not impact the final in-service strength of the material in an adverse way. This rapid annealing is an enabler for this sheet tube hydroforming application. In various aspects, the heating from the inline heater may restore some ductility in the metal of the intermediate hollow body, which may improve the integrity of the weld during hydroforming.

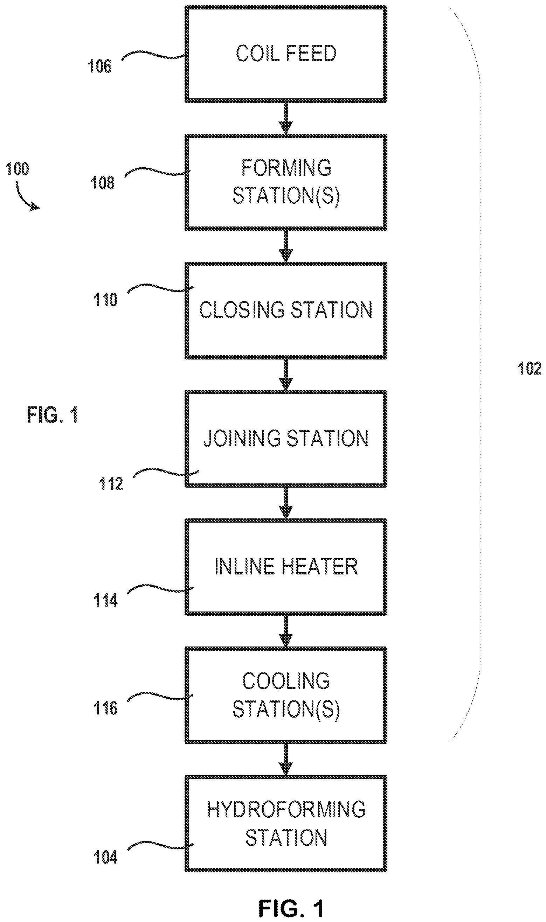

FIG. 1 is a block diagram of a forming system 100 according to various embodiments that includes a roll forming system 102 and a hydroforming system 104. The roll forming system 102 of the forming system 100 generally bends a metal strip from a flat or planar configuration into a form of an intermediate hollow body (e.g., a generally tubular form having any cross-section shape as desired). The hydroforming system 104 of the forming system 100 generally shapes the intermediate hollow body to a final hollow body by using a mold and a highly pressurized fluid on the intermediate hollow body to form the final hollow body.

The roll forming system 102 includes a coil feed 106, one or more forming stations 108, a closing station 110, a joining station 112, an inline heater 114, and one or more cooling stations 116. Optionally, the roll forming system 102 may include other stations as desired. As a non-limiting example, a cutting station (not shown) may be provided downstream from the cooling station(s) 116 to cut the intermediate hollow body into desired lengths.

The coil feed 106 of the roll forming system 102 supplies an elongated metal strip to the roll forming system 102. In various aspects, the elongated metal strip is provided in coil form, although it need not be in other embodiments. From the coil feed 106, the metal strip is supplied in a generally flat or planar configuration to the forming station(s) 108, which sequentially bend the metal strip from the flat or planar configuration such that longitudinal edges of the metal strip are brought together. Depending on the desired cross-sectional shape of the intermediate hollow body, any desired number of forming stations 108 may be utilized, and the forming stations 108 may bend the metal strip as desired to achieve the desired cross-sectional shape. In certain embodiments, the forming stations 108 may include rollers that sequentially bend the metal strip from the flat or planar configuration, although various other suitable devices for bending the metal strip may be utilized at the forming stations 108.

The closing station 110 of the roll forming system 102 may further bend the bent metal strip from the forming stations 108 such that the longitudinal edges of the bent metal strip are brought into in an abutting and/or overlapping relationship. In certain aspects, the closing station 110 includes fin pass rollers and/or other suitable devices for bringing the longitudinal edges into the abutting and/or overlapping relationship. The joining station 112 joins the longitudinal edges together via a joining technique to form the intermediate hollow body having a seam region. In various embodiments, the joining station 112 includes a welding device, and the longitudinal edges are seam welded together to form the seam region.

The inline heater 114 is downstream from the joining station 112 and is configured to heat at least the seam region of the intermediate hollow body. The inline heater 114 may be various devices or combination of devices suitable for heating at least the seam region, including but not limited to, a rotating magnet, an induction inline heater, a gas-powered inline heater, an infrared inline heater, an electric furnace, combinations thereof, or other suitable devices as desired.

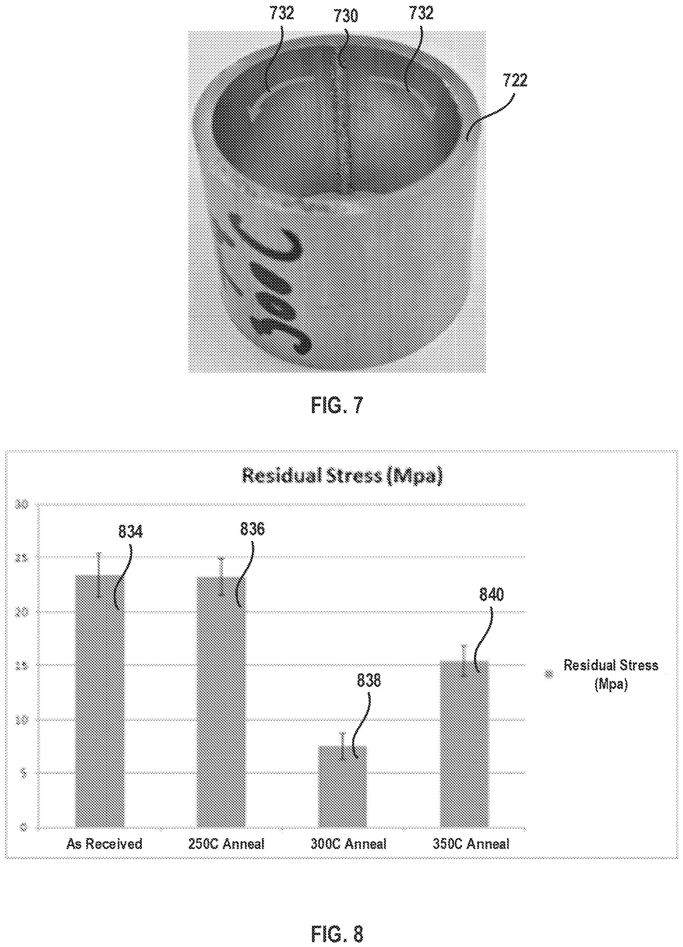

The inline heater 114 is controlled by a controller (not shown) communicatively coupled to the inline heater 114 such that the inline heater 114 heats at least the seam region for a predetermined heating time at a predetermined heating temperature. The predetermined heating time is from greater than 0 seconds to 30 seconds. In one non-limiting example, the predetermined heating time may be 30 seconds. As used, the "predetermined heating time" includes both a ramp up time (e.g., the time it takes to reach the particular temperature) and a dwell time (e.g., the time the metal product is held at the particular temperature). In certain cases, a ramp up time may be 10 seconds or less, although in other embodiments the ramp up time may be less than 10 seconds or greater than 10 seconds. In some cases, the predetermined time may only include a ramp up time and may not include a dwell time. The predetermined heating temperature is greater than or equal to 250 °C to 550°C, such as from 350 °C to 550 °C, such as from 375 °C to 500 °C, such as from 400 °C to 475 °C, such as about 450 °C. In some non-limiting examples, the inline heater 114 is controlled to heat the intermediate hollow body for a predetermined heating time of 30 seconds at a predetermined heating temperature of 375 °C to 525 °C. In certain aspects, and as will be discussed in greater detail below with reference to FIGS. 7-13, heating the intermediate hollow body with the inline heater 114 may allow for stress relief of the material, a decrease in strength, and control of material properties across the seam region, which may improve the integrity of the seam during hydroforming.

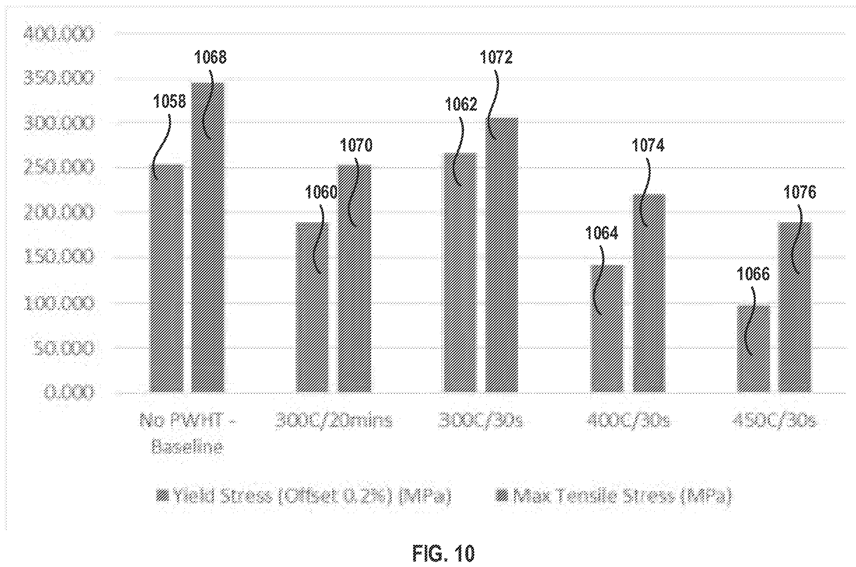

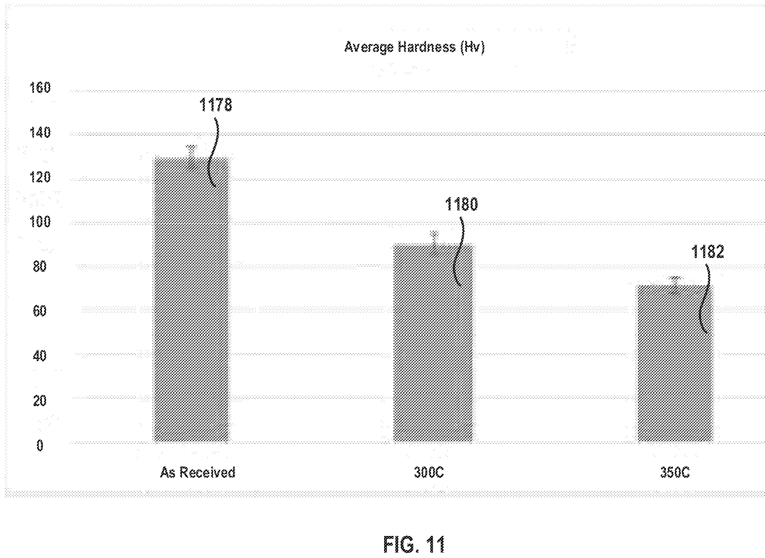

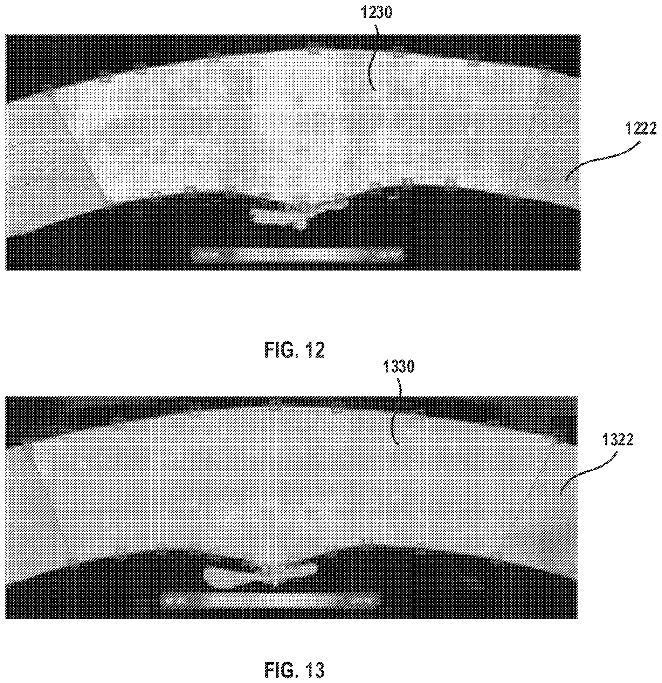

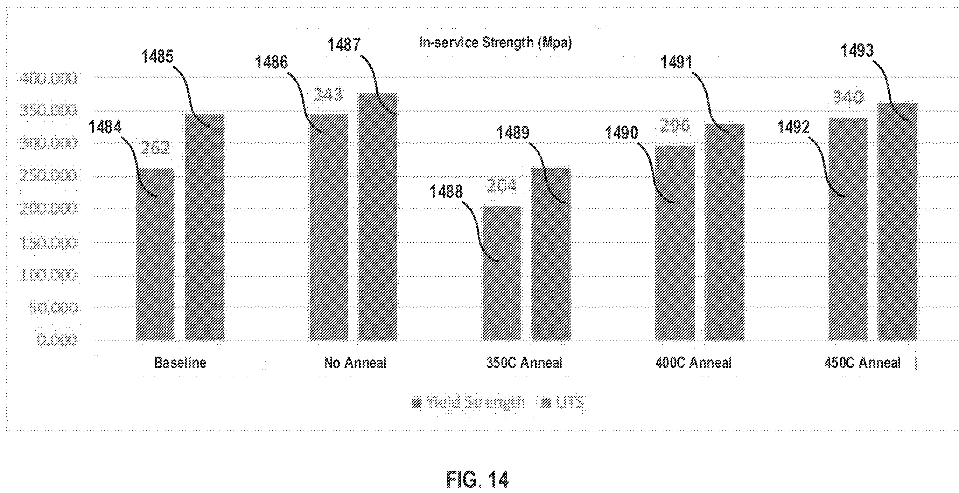

In some embodiments, the inline heater 114 may be controlled to control at least one of a hardness gradient of the seam region, a residual stress in the seam region, an average hardness of the seam region, or a strength of the seam region. In other embodiments, the inline heater 114 may be controlled to control other aspects of the seam region. As will be discussed in greater detail with reference to FIG. 8 below, in one non-limiting example, the inline heater 114 may be controlled such that the residual stress in the seam region is less than about 20 MPa, such as less than about 15 MPa, although in other embodiments the inline heater 114 is controlled such that a residual stress is other suitable values as desired. As will be discussed in greater detail with reference to FIG. 10 below, in one non-limiting example, the inline heater 114 may be controlled such that a yield stress of the seam region is less than 300 MPa, such as less than 200 MPa, such as less than 150 MPa, although in other embodiments, the inline heater 114 is controlled such that the yield stress may be other suitable values as desired. As will be discussed in greater detail with reference to FIG. 10 below, in one non-limiting example, the inline heater 114 may be controlled such that a maximum tensile stress of the seam region is less than 300 MPa, such as less than 250 MPa, such as less than 2000 MPa, although in other embodiments, the inline heater 114 is controlled such that the maximum tensile stress may be other suitable values as desired. In another non-limiting example, and as will be discussed with greater reference to FIGS. 11-13 below, the inline heater 114 may be controlled such that an average hardness of the seam region is less than 100 Hv, such as less than 80 Hv, although in other embodiments the inline heater 114 is controlled such that the seam region has other average hardness values as desired. In a further non-limiting example, and as will be discussed with greater reference to FIGS. 12 and 13 below, the inline heater 114 may be controlled such that a hardness gradient is reduced and hardness distribution across the seam region is more uniform and homogenized, although in other embodiments the inline heater 114 is controlled to provide various hardness gradients as desired. In a non-limiting example, and as will be discussed with greater reference to FIG. 14 below, the inline heater 114 may be controlled such that the yield strength of the seam region is at least 290 MPa, although in other embodiments, the inline heater 114 may be controlled such that the yield strength of the seam region is other values as desired. The one or more cooling stations 116 are downstream from the inline heater 114 and are configured to quench the intermediate hollow body. The cooling station(s) 116 may be various suitable devices for quenching the intermediate hollow body. In some non-limiting examples, the cooling station(s) 116 may be an air cooling device, a water cooling device, combinations thereof, or other suitable devices as desired.

As previously mentioned, the hydroforming system 104 of the forming system 100 shapes the intermediate hollow body to a final hollow body by using a mold and a highly pressurized fluid on the intermediate hollow body to form the final hollow body. Optionally, the forming system 100 may include a pre-bending station prior to the hydroforming system 104 for preparing the intermediate hollow body for the hydroforming process.

In various embodiments, a method of forming an intermediate hollow body includes providing a supply of a metal strip at the coil feed 106. In some aspects, the supply of the metal strip is provided in coil form. In various embodiments, the metal strip may be various metal as desired, including but not limited to aluminum, aluminum alloys, steel, or other metals as desired. In one non-limiting example, the metal strip may be a 6xxx series aluminum alloy.

The method includes supplying the metal strip from the coil feed 106 to the forming station(s) 108. Supplying the metal strip from the coil feed 106 may include supplying the metal strip in a generally flat or planar configuration to the forming station(s) 108. The method includes bending the metal strip with the forming station(s) 108 from the flat or planar configuration such that the longitudinal edges of the metal strip are brought together and the metal strip is bent into a desired cross-sectional shape. In certain aspects, bending the metal strip with the forming station(s) 108 includes sequentially bending the metal strip with a plurality of rollers such that the longitudinal edges are brought together and the metal strip is bent into the desired cross-sectional shape.

The method includes further bending the bent metal strip with the closing station 110 such that the longitudinal edges of the bent metal strip are brought into in an abutting and/or overlapping relationship. In certain aspects, bending the bent metal strip with the closing station 110 includes bending the bent metal strip with fin pass rollers and/or other suitable devices for bringing the longitudinal edges into the abutting and/or overlapping relationship. In various embodiments, the method includes joining the longitudinal edges together via a joining technique with the joining station 112 to form the intermediate hollow body having a seam region. In certain embodiments, joining the longitudinal edges includes seam welding the longitudinal edges with a welding device to form intermediate hollow body having the seam region.

In various embodiments, the method includes heating at least the seam region of the intermediate hollow body with the inline heater 114 and quenching the intermediate hollow body with the cooling station(s) 116. In some embodiments, heating at least the seam region includes heating the intermediate hollow body with a rotating magnet, an induction inline heater, a gas-powered inline heater, an infrared inline heater, an electric furnace, combinations thereof, or other suitable devices as desired. Heating the intermediate hollow body with the inline heater 114 includes heating the intermediate hollow body for the predetermined heating time and at the predetermined heating temperature. Heating the intermediate hollow body for the predetermined heating time and at the predetermined heating temperature includes heating the intermediate hollow body with the inline heater 114 for a duration of from greater than 0 seconds to 30 seconds and at a temperature of from greater than or equal to 250 °C to 550 °C. In certain cases, heating the intermediate hollow body with the inline heater 114 includes controlling at least one of a hardness gradient of the seam region, a residual stress in the seam region, an average hardness of the seam region, or a strength of the seam region.

The method of forming a final hollow body includes hydroforming the intermediate hollow body with the hydroforming system 104.

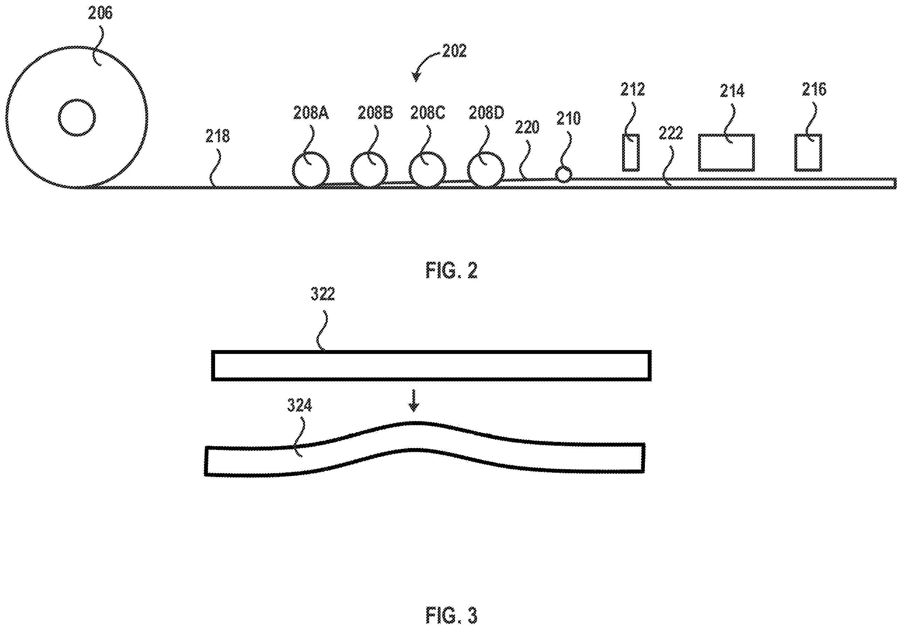

FIG. 2 illustrates a roll forming system 202 of a forming system. The roll forming system 202 may be substantially similar to the roll forming system 102 and includes a coil feed 206, which may be substantially similar to the coil feed 106, the forming stations 208A-D, which may be substantially similar to the forming station(s) 108, a closing station 210, which may be substantially similar to the closing station 110, and the joining station 212, which may be substantially similar to the joining station 112. Similar to the roll forming system 102, the roll forming system 202 also includes an inline heater 214, which may be substantially similar to the inline heater 114, and a cooling station 216, which may be substantially similar to the cooling station(s) 116. As illustrated in FIG. 2, a metal strip 218 is supplied from the coil feed 206 in a generally planar or flat configuration. The forming stations 208A-D sequentially bend the metal strip 218 from the planar or flat configuration, which is represented in FIG. 2 by the raised longitudinal edge 220 of the metal strip 218. After the longitudinal edge 220 is joined with the opposing longitudinal edge (not visible in FIG. 2) via the joining station 212, such as by welding, the intermediate hollow body 222 is formed, and the intermediate hollow body 222 may be heated with the inline heater 214 and quenched with the cooling station 216.

FIG. 3 illustrates an intermediate hollow body 322, which may be substantially similar to the intermediate hollow body 222, and a final hollow body 324 after hydroforming by a hydroforming station such as the hydroforming system 104.

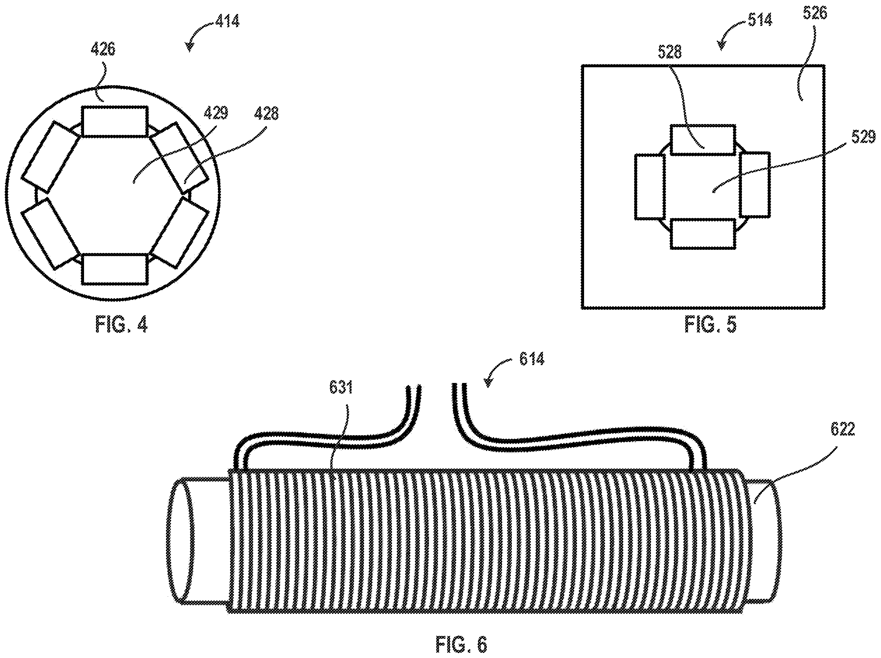

FIGS. 4-6 illustrate non-limiting examples of devices that may be utilized as heaters of a roll forming system of a forming system. Various other types of heaters may be utilized as desired with the roll forming systems described herein.

FIG. 4 illustrates a heater 414 that is a rotating magnet heater and includes a support 426 and one or more magnets 428 supported on the support 426. In certain aspects, the heater 414 may receive an intermediate hollow body within an opening 429 of the heater 414, and the heater 414 may be rotated round the intermediate hollow body to heat the intermediate hollow body, or the intermediate hollow body may be rotated while the heater 414 is held stationary to heat the intermediate hollow body.

FIG. 5 illustrates a heater 514 that is substantially similar to the heater 414 and is a rotating magnet heater that includes a support 526 and one or more magnets 528. Compared to the heater 414, the arrangement and the number of the magnets 528 and the shape of an opening 529 of the heater 514 are different. Similar to the heater 414, the heater 514 may be rotated while the intermediate hollow body is held stationary or vice versa.

FIG. 6 illustrates a heater 614 that is an induction heater having an induction coil 631 that may at least partially surround an intermediate hollow body 622.

FIG. 7 illustrates an example of a cut intermediate hollow body 722 formed by a forming system such as the forming system 100. As illustrated in FIG. 7, the intermediate hollow body 722 has a seam region 730 where the longitudinal edges of the metal strip are joined together by the joining station. While the intermediate hollow body 722 is illustrated with a circular cross-section, the intermediate hollow body 722 may have other shapes as desired depending on the forming station(s) included with the roll forming system.

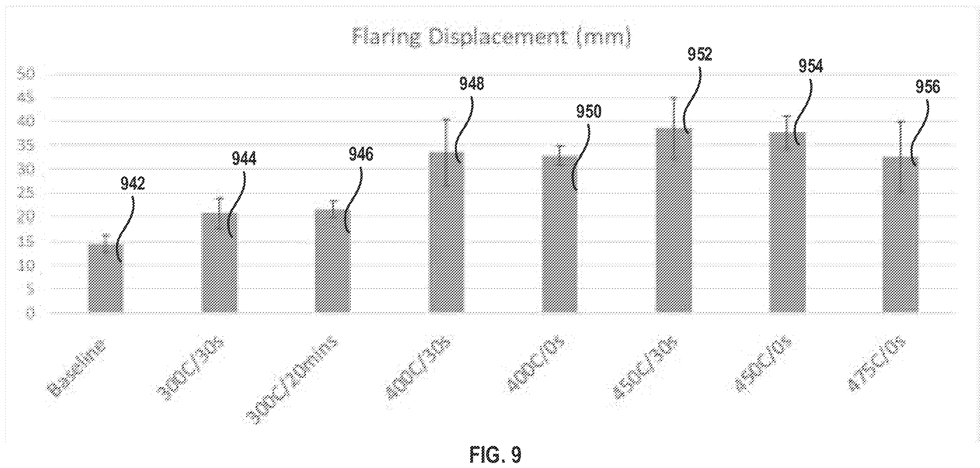

As mentioned, a forming system with a roll forming system having an inline heater may produce intermediate hollow bodies having improved hydroforming performance. In some cases, heating with the inline heater may reduce the residual stress in a hoop direction at the seam region of the intermediate hollow body compared to intermediate hollow bodies without inline heat treatment (FIG. 8). In various cases, heating with the inline heater may improve flaring displacement in the intermediate hollow body compared to intermediate hollow bodies without inline heat treatment (FIG. 9). In certain cases, heating with the inline heater may soften the intermediate hollow body compared to intermediate hollow bodies without inline heat treatment (FIG. 10). In various embodiments, heating with the inline heater may decrease the hardness of the intermediate hollow body compared to intermediate hollow bodies without inline heat treatment (FIG. 11). In some embodiments, heating with the inline heater may surprisingly improve the distribution of hardness across the seam region of the intermediate hollow body compared to intermediate hollow bodies without inline heat treatment (FIGS. 11 and 12).

FIG. 8 illustrates residual stresses in four samples of intermediate hollow bodies. Each intermediate hollow body is a 6xxx series aluminum alloy and was formed by the same process except for heating with an inline furnace as discussed below. The residual stresses were measured in a hoop direction of each intermediate product (represented by arrows 732 in FIG. 7). The times / durations provided in FIG. 8 are all dwell / soaking times (i.e., the duration that each body was held at a particular temperature), and each intermediate body had a ramp up time (i.e., a duration for which the body was heated to reach the particular temperature). For example, a duration shown as "0 seconds" means that the intermediate body was heated during the ramp up time but was not held at the temperature once it was reached, and does not mean that the intermediate body was not heated. The sample intermediate hollow body represented by bar 834 was formed without any heating from an inline heater. The sample intermediate hollow body represented by bar 836 was formed with heating from an inline heater at a temperature of 250 °C and for a duration of 30 seconds. The sample intermediate hollow body represented by bar 838 was formed with heating from an inline heater at a temperature of 300 °C and for a duration of 30 seconds. The sample intermediate hollow body represented by bar 840 was formed with heating from an inline heater at a temperature of 350 °C and for a duration of 30 seconds. The residual stress represented by bar 834 was about 23 MPa, the residual stress represented by bar 836 was about 23 MPa, the residual stress represented by bar 838 was about 7 MPa, and the residual stress represented by bar 840 was about 15 MPa. As illustrated by comparing bar 834 to bars 836-840, respectively, inline heating reduced the residual stress at the seam regions of the intermediate hollow bodies as the heating temperature increased. The reduction in residual stress provided by the inline heater may improve the formability and the integrity of the seam regions during hydroforming compared to intermediate hollow bodies without inline heating.

FIG. 9 illustrates flaring displacements in eight samples of intermediate bodies as tested pursuant to a double cone flaring test. The times / durations provided in FIG. 9 are all dwell times / durations (i.e., the duration that each body was held at a particular temperature), and each intermediate body had a ramp up time (i.e., a duration for which the body was heated to reach the particular temperature). For example, a duration shown as "0 seconds" means that the intermediate body was heated during the ramp up time but was not held at the temperature once it was reached, and does not mean that the intermediate body was not heated. Each intermediate hollow body is a 6xxx series aluminum alloy and was formed by the same process except for heating with an inline furnace as discussed below. The sample intermediate hollow body represented by bar 942 was formed without any heating from an inline heater (not according to the invention). The sample intermediate hollow body represented by bar 944 was formed with heating from an inline heater at a temperature of 300 °C and for a duration of 30 seconds. The sample intermediate hollow body represented by bar 946 was formed with heating from an inline heater at a temperature of 300 °C and for a duration of 20 minutes (not according to the invention). The sample intermediate hollow body represented by bar 948 was formed with heating from an inline heater at a temperature of 400 °C and for a duration of 30 seconds. The sample intermediate hollow body represented by bar 950 was formed with heating from an inline heater at a temperature of 400 °C and for a duration of 0 seconds. The sample intermediate hollow body represented by bar 952 was formed with heating from an inline heater at a temperature of 450 °C and for a duration of 30 seconds. The sample intermediate hollow body represented by bar 954 was formed with heating from an inline heater at a temperature of 450 °C and for a duration of 0 seconds. The sample intermediate hollow body represented by bar 956 was formed with heating from an inline heater at a temperature of 475 °C and for a duration of 0 seconds. As illustrated by comparing bar 942 with the other bars 944-956, heating with the inline heater at various combinations of temperatures and durations increased the flaring displacement of the intermediate hollow bodies. In certain aspects, changing the heating temperature had a more significant impact on the flaring displacements compared to changing the heating durations. Compare, for example, the difference between bar 944 and bar 948, where the duration was held constant but the heating temperature changed, with the difference between bar 944 and bar 946, where the heating temperature was held constant but the heating duration changed.

FIG. 10 illustrates yield stresses and maximum tensile stresses in five samples of intermediate hollow bodies. Each intermediate hollow body is a 6xxx series aluminum alloy and was formed by the same process except for heating with an inline furnace as discussed below. The times / durations provided in FIG. 10 are all dwell times (i.e., the duration that each body was held at a particular temperature), and each intermediate body had a ramp up time (i.e., a duration for which the body was heated to reach the particular temperature). For example, a duration shown as "0 seconds" means that the intermediate body was heated during the ramp up time but was not held at the temperature once it was reached, and does not mean that the intermediate body was not heated. The sample intermediate hollow body represented by bars 1058 and 1068 was formed without any heating from an inline heater (not according to the invention). The sample intermediate hollow body represented by bars 1060 and 1070 was formed with heating from an inline heater at a temperature of 300 °C and for a duration of 20 minutes (not according to the invention). The sample intermediate hollow body represented by bars 1062 and 1072 was formed with heating from an inline heater at a temperature of 300 °C and for a duration of 30 seconds. The sample intermediate hollow body represented by bars 1064 and 1074 was formed with heating from an inline heater at a temperature of 400 °C and for a duration of 30 seconds. The sample intermediate hollow body represented by bars 1066 and 1076 was formed with heating from an inline heater at a temperature of 450 °C and for a duration of 30 seconds. As illustrated in FIG. 10, the heating from the inline heater in general decreased the strength of the intermediate hollow bodies compared to the intermediate hollow body without inline heating, and in general the strength decreased as the heating temperature increased. The decreased strength of the intermediate hollow bodies with the inline heating may surprisingly allow for improved formability and integrity during hydroforming compared to the intermediate hollow body without the inline heating.

FIG. 11 illustrates the average hardness of seam regions of three samples of intermediate hollow bodies. The times / durations provided in FIG. 11 are all dwell times (i.e., the duration that each body was held at a particular temperature), and each intermediate body had a ramp up time (i.e., a duration for which the body was heated to reach the particular temperature). For example, a duration shown as "0 seconds" means that the intermediate body was heated during the ramp up time but was not held at the temperature once it was reached, and does not mean that the intermediate body was not heated. Each intermediate hollow body is a 6xxx series aluminum alloy and was formed by the same process except for heating with an inline furnace as discussed below. The sample intermediate hollow body represented by bar 1178 was formed without inline heating (not according to the invention). The sample represented by bar 1180 was formed with heating from an inline heater at a temperature of 300 °C and for a duration of 30 seconds. The sample represented by bar 1182 was formed with heating from an inline heater at a temperature of 350 °C and for a duration of 30 seconds. As illustrated by comparing bar 1178 with bars 1180 and 1182, the heating from the inline furnace decreased the average hardness of the seam regions of the intermediate bodies compared to the average hardness of the seam regions of the intermediate body without inline heating. In certain aspects, the decreased average hardness may surprisingly allow for improved formability and integrity during hydroforming compared to the intermediate hollow body without the inline heating.

FIG. 12 is a hardness heat map of a seam region 1230 of an intermediate hollow body 1222 that is a 6xxx series aluminum alloy and was formed without heating from an inline furnace (not according to the invention). In FIG. 12, the minimum hardness was 117 Hv, the maximum hardness was 149 Hv, and the average hardness was 129 Hv. FIG. 13 is a hardness map of a seam region 1330 of an intermediate hollow body 1322 that is the same 6xxx series aluminum alloy as the intermediate hollow body 1222 but was formed with heating from an inline furnace at a temperature of 350 °C and for a dwell duration of 30 seconds. In FIG. 13, the minimum hardness was 55 Hv, the maximum hardness was 91 Hv, and the average hardness was 71 Hv. As illustrated by comparing FIG. 13 to FIG. 12, the hardness values of the seam region 1330 (minimum hardness, maximum hardness, and average hardness) were all decreased compared to the corresponding hardness values of the seam region 1230 (minimum hardness, maximum hardness, and average hardness). Moreover, by comparing the heat distributions, the hardness of the seam region 1330 was more homogeneous / had a more uniform distribution of hardness across the seam region 1330 compared to the seam region 1230. The decreased hardness and more uniform distribution of hardness provided by the heating with the inline heater may surprisingly allow for improved formability and integrity during hydroforming compared to the intermediate hollow body without the inline heating.

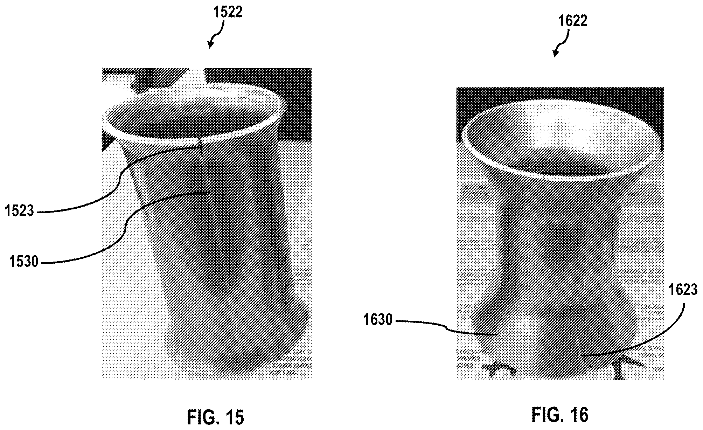

FIG. 14 illustrates in-service yield strengths and ultimate tensile strengths (i.e., strengths after hydroforming) in five samples of final hollow bodies. Each final hollow body is a 6xxx series aluminum alloy and was formed by the same process except as discussed below. The times / durations provided in FIG. 14 are all dwell times (i.e., the duration that each body was held at a particular temperature), and each intermediate body had a ramp up time (i.e., a duration for which the body was heated to reach the particular temperature). For example, a duration shown as "0 seconds" means that the intermediate body was heated during the ramp up time but was not held at the temperature once it was reached, and does not mean that the intermediate body was not heated. The sample final hollow body represented by bars 1484 and 1485 was formed without any heating from an inline heater (not according to the invention) and was hydroformed without a post form heat treatment or a paint bake. The sample final hollow body represented by bars 1486 and 1487 was formed without heating from an inline heater (not according to the invention) but with a post form heat treatment and a paint back prior to hydroforming. The sample final hollow body represented by bars 1488 and 1489 was formed with heating from an inline furnace at a temperature of 350 °C and for a duration of 30 seconds as well as a post form heat treatment and a paint back prior to hydroforming. The sample final hollow body represented by bars 1490 and 1491 was formed with heating from an inline furnace at a temperature of 400 °C and for a duration of 30 seconds as well as a post form heat treatment and a paint back prior to hydroforming. The sample final hollow body represented by bars 1492 and 1493 was formed with heating from an inline furnace at a temperature of 450 °C and for a duration of 30 seconds as well as a post form heat treatment and a paint back prior to hydroforming. In certain embodiments and depending on a particular application for the final hollow bodies, the final hollow bodies may be required to meet certain strength requirements. As one non-limiting example, certain automotive applications may require a yield strength of at least 290 MPa. As illustrated in FIG. 15, at certain heating temperatures, the final hollow bodies that had the inline heating had in-service strengths that were comparable or better than those that did not have the inline heating and/or were capable of meeting a required yield strength. In other words, the final hollow bodies that had the inline heating were easier to form via hydroforming but still provided comparable or better strengths at certain heating temperatures and/or that could meet performance requirements.

FIG. 15 illustrates an intermediate hollow body 1522 formed without heat treatment (not according to the invention), and FIG. 16 illustrates an intermediate hollow body 1622 formed by a forming system such as the forming system 100. Both hollow bodies 1522, 1622 were the same 6xxx aluminum alloy, and both were subjected to the same double cone flaring test to produce the flared bodies 1522, 1622 illustrated in FIGS. 15 and 16. Referring to FIG. 15, the traditional intermediate hollow body 1522 achieved a flaring displacement of 17 mm before a crack 1523 formed on the intermediate body 1522, and the crack 1523 was formed in a weld or seam region 1530 of the hollow body 1522. Referring to FIG. 16, the hollow body 1622 formed using systems and methods described herein by heating the hollow body 1622 to a temperature of 400 °C during a ramp up time but was not held at that temperature once it was reached. The hollow body 1622 achieved a flaring displacement of about 54 mm before a crack 1623 formed on the intermediate body 1622, and the crack 1623 was formed in the parent metal of the intermediate body 1622 (i.e., a portion of the intermediate body 1622 other than a weld or seam region 1630), and the weld or seam region 1630 was not cracked. By comparing FIG. 15 with FIG. 16, the intermediate hollow body 1622 had improved formability and integrity compared to the hollow body 1522 without the inline heating as represented by the improved flaring performance (54 mm vs. 17 mm). Moreover, the location of the crack 1623 in the hollow body 1622 (i.e., in the parent metal rather than the seam region 1630) represents a more homogeneous microstructure and/or homogenous distribution of hardness compared to that of the intermediate body 1522.

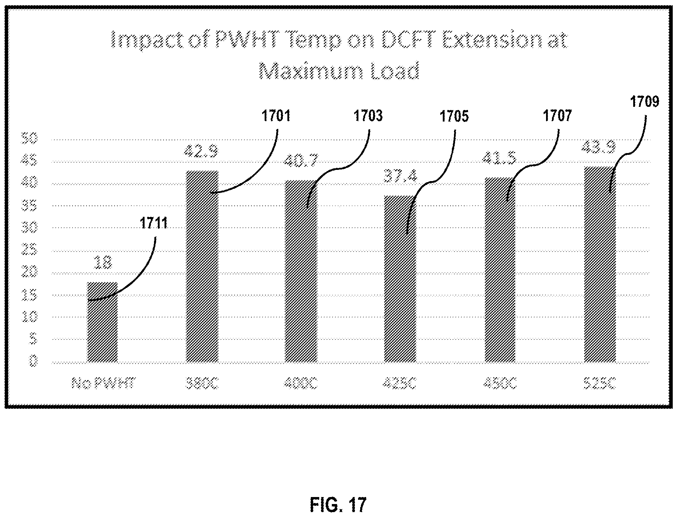

FIG. 17 illustrates flaring displacements in five samples of intermediate bodies formed pursuant to methods described herein and a control sample formed without heating (represented by bar 1711). All samples were tested pursuant to a double cone flaring test. Each sample was a 6xxx series aluminum alloy and was formed by a forming system. All samples except for the control sample included heating as part of the forming process, and in those samples, the duration that each sample was heated was the same, but the temperature to which each sample was heated was different. In particular: the sample intermediate body represented by bar 1701 was formed by heating the sample with an inline heater to a temperature of 380 °C; the sample intermediate body represented by bar 1703 was formed by heating the sample with an inline heater to a temperature of 400 °C; the sample intermediate body represented by bar 1705 was formed by heating the sample with an inline heater to a temperature of 425 °C; the sample intermediate body represented by bar 1707 was formed by heating the sample with an inline heater to a temperature of 450 °C; and the sample intermediate body represented by bar 1709 was formed by heating the sample with an inline heater to a temperature of 525 °C. As mentioned, the sample formed without heating is represented by bar 1711.

As illustrated in FIG. 17, the sample represented by bar 1701 had an average flaring displacement of 42.9 mm; the sample represented by bar 1703 had an average flaring displacement of 40.7 mm; the sample represented by bar 1705 had an average flaring displacement of 37.4 mm; the sample represented by bar 1707 had an average flaring displacement of 41.5 mm; and the sample represented by bar 1709 had an average flaring displacement of 43.9 mm. The control sample represented by bar 1711 had an average flaring displacement of 17 mm. As illustrated, each of the samples formed with heating (e.g., bars 1701, 1703, 1705, 1707, and 1709) exhibited a flaring displacement of greater than that of the control sample (bar 1711), and in particular exhibited a flaring displacement that was at least double that of the control sample. The results of FIG. 17 illustrate the improved formability of the bodies when formed with heating.

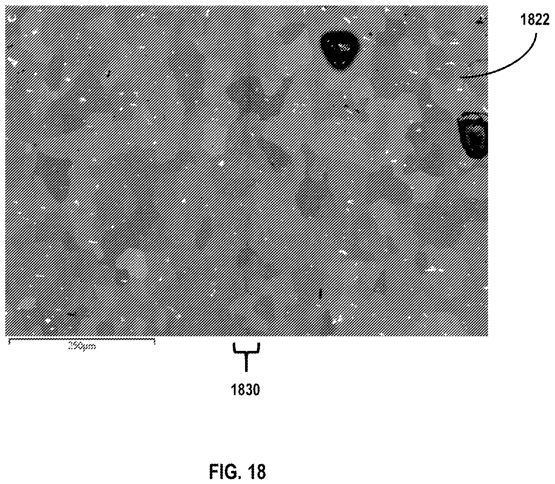

FIG. 18 is a photograph of a microstructure of a seam region 1830 in a hollow body 1822 formed according to the methods described herein. The hollow body 1822 was a 6xxx series aluminum alloy that was formed by heating the sample with an inline heater to a temperature of 400 °C during a ramp up period but was not held at that temperature once reached. As illustrated in FIG. 18, the microstructure of the seam region 1830 is restored to being an almost equiaxed fully recrystallized microstructure compared to the non-seam regions of the hollow body 1622, thereby illustrating that the heating according to embodiments of the disclosure produce improved hollow bodies.

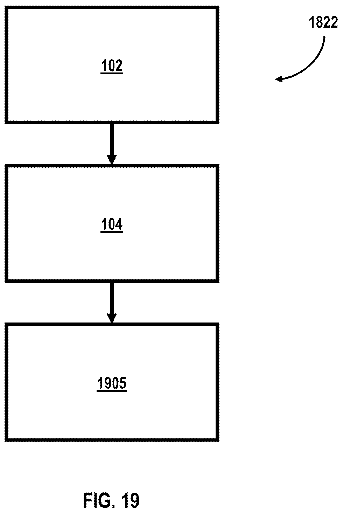

FIG. 19 is a block diagram of another forming system 1900 according to embodiments. The forming system 1900 is substantially similar to the forming system 100 and includes the roll forming system 102 and the hydroforming system 104. Compared to the forming system 100, the forming system 1900 additionally includes a paint bake system 1905. The paint bake system 1905 may be various suitable systems, devices, and mechanisms for performing a paint bake cycle on hollow body formed by the roll forming system 102 and the hydroforming system 104. In certain embodiments, performing a paint bake cycle on the hollow bodies formed by the roll forming system 102 and the hydroforming system 104 may increase the in-service strength of the hollow bodies compared to both traditionally formed hollow bodies without a paint bake cycle and hollow bodies formed by the roll forming system 102 and the hydroforming system 104 but without a paint bake cycle. In some embodiments, the paint bake cycle may increase the in-service strength to be closer to a peak yield strength of the alloy forming the hollow bodies compared to hollow bodies formed without the paint bake cycle.

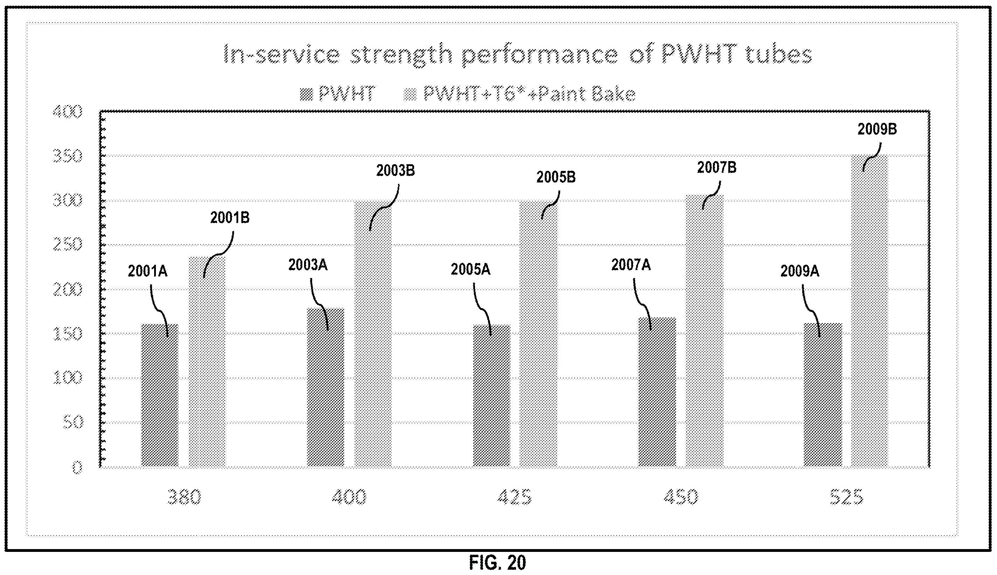

FIG. 20 is a chart illustrating in-service performance of ten samples of intermediate bodies formed pursuant to methods described herein. The units on the y-axis of the chart of FIG. 20 are Mpa. Each sample was a 6xxx series aluminum alloy and was formed by heating during roll forming. The duration that each sample was heated was the same, but the temperature to which each sample was heated was varied as discussed below. In addition, some of the samples were subjected to a paint bake cycle, which was performed the same for each of those samples. The sample intermediate body represented by bar 2001A was formed by heating the sample with an inline heater to a temperature of 380 °C. The sample intermediate body represented by bar 2001B was formed by heating the sample with an inline heater to a temperature of 380 °C, and compared to the sample represented by bar 2001A, the sample represented by bar 2001B was further subjected to a paint bake cycle. The sample intermediate body represented by bar 2003A was formed by heating the sample with an inline heater to a temperature of 400 °C. The sample intermediate body represented by bar 2003B was formed by heating the sample with an inline heater to a temperature of 400 °C, and compared to the sample represented by bar 2003A, the sample represented by bar 2003B was further subjected to a paint bake cycle. The sample intermediate body represented by bar 2005A was formed by heating the sample with an inline heater to a temperature of 425 °C. The sample intermediate body represented by bar 2005B was formed by heating the sample with an inline heater to a temperature of 380 °C, and compared to the sample represented by bar 2005A, the sample represented by bar 2005B was further subjected to a paint bake cycle. The sample intermediate body represented by bar 2007A was formed by heating the sample with an inline heater to a temperature of 450 °C. The sample intermediate body represented by bar 2007B was formed by heating the sample with an inline heater to a temperature of 450 °C, and compared to the sample represented by bar 2007A, the sample represented by bar 2007B was further subjected to a paint bake cycle. The sample intermediate body represented by bar 2009A was formed by heating the sample with an inline heater to a temperature of 525 °C. The sample intermediate body represented by bar 2009B was formed by heating the sample with an inline heater to a temperature of 525 °C, and compared to the sample represented by bar 2009A, the sample represented by bar 2009B was further subjected to a paint bake cycle. As illustrated by comparing the samples with the paint bake cycle (e.g., samples represented by bars 2001B, 2003B, 2005B, 2007B, and 2009B) with the corresponding samples that were not (e.g., samples represented by bars 2001A, 2003A, 2005A, 2007A, and 2009A), the samples with the paint bake cycle exhibited markedly increased in-service strength performance. As a non-limiting example, the paint bake cycle samples all exhibited in-service strength performance of at least 200 Mpa, and the samples that were heated during roll forming to a temperature of at least 400 °C exhibited in-service strength performance of greater than 250 Mpa, such as about 300 Mpa. The results in FIG. 20 also generally indicate that increasing the temperature of the heating during roll forming in combination with a paint bake cycle may produce hollow bodies with the highest in-strength performance. It is noted that while the samples with the paint bake cycle had improved in-service strength performance, the samples without the paint bake cycle were generally improved compared to traditionally formed hollow bodies, and their in-service strength may be suitable (e.g., meet a minimum yield strength requirement) for various applications as products

## Claims

1. A forming system (100) for forming a final hollow body from a metal strip (218), the forming system (100) comprising:
a forming station (108, 208A-D) configured to receive the metal strip (218) in a planar configuration and bend the metal strip (218) to a desired cross-section and such that longitudinal edges (220) of the metal strip (218) are abutting, wherein the forming station (108, 208A-D) comprises at least one roller;
a joining station (112, 212) downstream from the forming station (108, 208A-D) and configured to weld the abutting longitudinal edges (220) together as a seam region (730) and form an intermediate hollow body (222, 322);
an inline heater (114, 214) downstream from the joining station (112, 212) and configured to selectively heat at least the seam region (730) of the intermediate hollow body (222, 322);
a hydroforming station (104) downstream from the inline heater (114, 214) and configured to hydroform the intermediate hollow body (222, 322) to the final hollow body (324),
characterized therein that the forming system (100) further comprises
a controller communicatively coupled to the inline heater (114, 214), wherein the controller is configured to control the inline heater (114, 214) such that the inline heater (114, 214) heats the intermediate hollow body (222, 322) at a temperature from 250 °C to 550 °C; and wherein the controller is configured to control the inline heater (114, 214) such that the inline heater (114, 214) heats the intermediate hollow body (222, 322) for a duration of greater than 0 seconds to 30 seconds.

2. The forming system (100) of claim 1, wherein the forming station (108, 208A-D) comprises a plurality of rollers and wherein the forming station (108, 208A-D) is configured to sequentially bend the metal strip (218) from the planar configuration.

3. The forming system (100) of claim 1 or 2, wherein the inline heater (414, 514) comprises at least one of a rotating magnet (428, 528), an induction inline heater (614), a gas-powered inline heater, an infrared inline heater, or an electric furnace.

4. The forming system (100) of claim 3, wherein the inline heater (414, 514) comprises the rotating magnet (428, 528), and wherein the intermediate hollow body (222, 322) is movable along an axis that is parallel to an axis of rotation of the rotating magnet (428, 528).

5. The forming system (100) of any one of claims 1-4, further comprising a quenching station (116, 216) between the joining station (112, 212) and the hydroforming station (104) that is configured to selectively quench the intermediate hollow body (222, 322).

6. The forming system (100) of any one of claims 1-5, wherein the controller is configured to control the inline heater (114, 214) such that the inline heater (114, 214) heats the intermediate hollow body (222, 322) at a temperature from 300 °C to 550 °C.

7. A method of forming a final hollow body (324) from a metal strip (218), the method comprising:
roll forming (102, 202) the metal strip (218) to a desired cross-section and such that longitudinal edges (220) of the metal strip (218) are abutting;
welding (112, 212) the longitudinal edges (220) together as a seam region (730) and to form an intermediate hollow body (222, 322);
heating (114, 214) at least the seam region (730) of the intermediate hollow body (222, 322);
hydroforming (104) the intermediate hollow body (222, 322) to the final hollow body (324), characterized therein that
heating (114, 214) at least the seam region (730) comprises heating (114, 214) at least the seam region (730) for a duration of greater than 0 seconds to 30 seconds and at a temperature of 250 °C to 550 °C.

8. The method of claim 7, where the metal strip (218) comprises a 6xxx series aluminum alloy.

9. The method of claim 7 or 8, further comprising quenching (116, 216) the intermediate hollow body (222, 322) before hydroforming (104) the intermediate hollow body (222, 322) to the final hollow body (324); and/or
wherein heating (114, 214) comprises heating (114, 214) a non-seam region portion of the intermediate hollow body (222, 322).

10. The method of any one of claims 7-9, wherein heating (114, 214) at least the seam region (730) comprises heating (114, 214) at least the seam region (730) for a duration of greater than 0 seconds to 30 seconds and at a temperature of 300 °C to 550 °C; and/or wherein heating (114, 214) at least the seam region (730) comprises heating (414, 514) with at least one of a rotating magnet (428, 528), an induction inline heater (614), a gas-powered inline heater, an infrared inline heater, or an electric furnace.

11. The method of any one of claims 7-10, further comprising controlling at least one of a hardness gradient of the seam region (730) or a strength of the seam region (730) before hydroforming (104) by controlling at least one of a duration of the heating (114, 214) of the seam region (730) or a temperature of the heating (114, 115) of the seam region (730).

## Patentansprüche

1. Formsystem (100) zum Formen eines finalen Hohlkörpers aus einem Metallstreifen (218), wobei das Formsystem (100) umfasst:
eine Formstation (108, 208A-D), welche dazu eingerichtet ist, den Metallstreifen (218) in einer planaren Konfiguration aufzunehmen und den Metallstreifen (218) auf einen gewünschten Querschnitt sowie derart zu biegen, dass longitudinale Ränder (220) des Metallstreifens (218) angrenzend sind, wobei die Formstation (108, 208A-D) wenigstens eine Walze umfasst;
eine Verbindungsstation (112, 212), welche stromabwärts der Formstation (108, 208A-D) ist und dazu eingerichtet ist, die angrenzenden longitudinalen Ränder (220) als einen Nahtbereich (730) miteinander zu verschweißen und einen Zwischenhohlkörper (222, 322) zu formen;
einen Inline-Erhitzer (114, 214), welcher stromabwärts der Verbindungsstation (112, 212) ist und dazu eingerichtet ist, den Nahtbereich (730) des Zwischenhohlkörpers (222, 322) selektiv zu erhitzen;
eine Hydroformstation (104), welche stromabwärts des Inline-Erhitzers (114, 214) ist und dazu eingerichtet ist, den Zwischenhohlkörper (222, 322) zu dem finalen Hohlkörper (324) hydrozuformen,
**dadurch gekennzeichnet, dass** das Formsystem (100) ferner umfasst:
eine Steuereinheit, welche kommunikativ mit dem Inline-Erhitzer (114, 214) gekoppelt ist, wobei die Steuereinheit dazu eingerichtet ist, den Inline-Erhitzer (114, 214) derart zu steuern, dass der Inline-Erhitzer (114, 214) den Zwischenhohlkörper (222, 322) bei einer Temperatur von 250°C bis 550°C erhitzt, und wobei die Steuereinheit dazu eingerichtet ist, den Inline-Erhitzer (114, 214) derart zu steuern, dass der Inline-Erhitzer (114, 214) den Zwischenhohlkörper (222, 322) für eine Dauer von mehr als 0 Sekunden bis 30 Sekunden erhitzt.

2. Formsystem (100) nach Anspruch 1, wobei die Formstation (108, 208A-D) eine Mehrzahl von Walzen umfasst und wobei die Formstation (108, 208A-D) dazu eingerichtet ist, den Metallstreifen (218) sequenziell von der planaren Konfiguration zu biegen.

3. Formsystem (100) nach Anspruch 1 oder 2, wobei der Inline-Erhitzer (414, 514) wenigstens eines aus einem rotierenden Magneten (428, 528), einem Induktions-Inline-Erhitzer (614), einem gasbetriebenen Inline-Erhitzer, einem Infrarot-Inline-Erhitzer oder einem elektrischen Ofen umfasst.

4. Formsystem (100) nach Anspruch 3, wobei der Inline-Erhitzer (414, 514) den rotierenden Magneten (428, 528) umfasst, und wobei der Zwischenhohlkörper (222, 322) entlang einer Achse bewegbar ist, welche parallel zu einer Drehachse des rotierenden Magneten (428, 528) ist.

5. Formsystem (100) nach einem der Ansprüche 1-4, ferner umfassend eine Abschreckstation (116, 216) zwischen der Verbindungsstation (112, 212) und der Hydroformstation (104), welche dazu eingerichtet ist, den Zwischenhohlkörper (222, 322) selektiv abzuschrecken.

6. Formsystem (100) nach einem der Ansprüche 1-5, wobei die Steuereinheit dazu eingerichtet ist, den Inline-Erhitzer (114, 214) derart zu steuern, dass der Inline-Erhitzer (114, 214) den Zwischenhohlkörper (222, 322) bei einer Temperatur von 300°C bis 550°C erhitzt.

7. Verfahren zum Formen eines finalen Hohlkörpers (324) aus einem Metallstreifen (218), wobei das Verfahren umfasst:
Walzformen (102, 202) des Metallstreifens (218) auf einen gewünschten Querschnitt sowie derart, dass longitudinale Ränder (220) des Metallstreifens (218) angrenzend sind;
Verschweißen (112, 212) der angrenzenden Ränder (220) miteinander als einen Nahtbereich (730) und, um einen Zwischenhohlkörper (222, 322) zu formen;
Erhitzen (114, 214) wenigstens des Nahtbereichs (730) des Zwischenhohlkörpers (222, 322);
Hydroformen (104) des Zwischenhohlkörpers (222, 322) zu dem finalen Hohlkörper (324), **dadurch gekennzeichnet, dass**
das Erhitzen (114, 214) wenigstens des Nahtbereichs (730) ein Erhitzen (114, 214) wenigstens des Nahtbereichs (730) für eine Dauer von mehr als 0 Sekunden bis 30 Sekunden und bei einer Temperatur von 250°C bis 550°C umfasst.

8. Verfahren nach Anspruch 7, wobei der Metallstreifen (218) eine Aluminiumlegierung der 6xxx-Serie umfasst.

9. Verfahren nach Anspruch 7 oder 8, ferner umfassend Abschrecken (116, 216) des Zwischenhohlkörpers (222, 322) vor dem Hydroformen (104) des Zwischenhohlkörpers (222, 322) zu dem finalen Hohlkörper (324); und/oder
wobei das Erhitzen (114, 214) ein Erhitzen (114, 214) eines Nicht-Nahtbereich-Abschnitts des Zwischenhohlkörpers (222, 322) umfasst.

10. Verfahren nach einem der Ansprüche 7-9, wobei das Erhitzen (114, 214) wenigstens des Nahtbereichs (730) ein Erhitzen (114, 214) wenigstens des Nahtbereichs (730) für eine Dauer von mehr als 0 Sekunden bis 30 Sekunden und bei einer Temperatur von 300°C bis 550°C umfasst; und/oder
wobei das Erhitzen (114, 214) wenigstens des Nahtbereichs (730) ein Erhitzen (414, 514) mit wenigstens einem aus einem rotierenden Magneten (428, 528), einem Induktions-Inline-Erhitzer (614), einem gasbetriebenen Inline-Erhitzer, einem Infrarot-Inline-Erhitzer oder einem elektrischen Ofen umfasst.

11. Verfahren nach einem der Ansprüche 7-10, ferner umfassend Steuern wenigstens eines aus einem Härtegradienten des Nahtbereichs (730) oder einer Festigkeit des Nahtbereichs (730) vor dem Hydroformen (104) durch Steuern wenigstens eines aus einer Dauer des Erhitzens (114, 214) des Nahtbereichs (730) oder einer Temperatur des Erhitzens (114, 115) des Nahtbereichs (730).

## Revendications

1. Système de formage (100) pour former un corps creux final à partir d'une bande métallique (218), le système de formage (100) comprenant :
un poste de formage (108, 208A-D) configuré pour recevoir la bande métallique (218) dans une configuration plane et plier la bande métallique (218) à une section transversale souhaitée et de telle sorte que les bords longitudinaux (220) de la bande métallique (218) soient en butée, le poste de formage (108, 208A-D) comprenant au moins un rouleau ;
un poste d'assemblage (112, 212) en aval du poste de formage (108, 208A-D) et configuré pour souder les bords longitudinaux en butée (220) conjointement en tant que région de soudure (730) et former un corps creux intermédiaire (222, 322) ;
un dispositif de chauffage en ligne (114, 214) en aval du poste d'assemblage (112, 212) et configuré pour chauffer sélectivement au moins la région de soudure (730) du corps creux intermédiaire (222, 322) ;
un poste d'hydroformage (104) en aval du dispositif de chauffage en ligne (114, 214) et configuré pour hydroformer le corps creux intermédiaire (222, 322) en corps creux final (324),
**caractérisé en ce que** le système de formage (100) comprend en outre
un dispositif de commande couplé en communication au dispositif de chauffage en ligne (114, 214), le dispositif de commande étant configuré pour commander le dispositif de chauffage en ligne (114, 214) de telle sorte que le dispositif de chauffage en ligne (114, 214) chauffe le corps creux intermédiaire (222, 322) à une température de 250 °C à 550 °C ; et le dispositif de commande étant configuré pour commander le dispositif de chauffage en ligne (114, 214) de telle sorte que le dispositif de chauffage en ligne (114, 214) chauffe le corps creux intermédiaire (222, 322) pendant une durée de plus de 0 seconde à 30 secondes.

2. Système de formage (100) selon la revendication 1, dans lequel le poste de formage (108, 208A-D) comprend une pluralité de rouleaux et dans lequel le poste de formage (108, 208A-D) est configuré pour plier séquentiellement la bande métallique (218) à partir de la configuration plane.

3. Système de formage (100) selon la revendication 1 ou 2, dans lequel le dispositif de chauffage en ligne (414, 514) comprend au moins l'un parmi un aimant rotatif (428, 528), un dispositif de chauffage en ligne à induction (614), un dispositif de chauffage en ligne alimenté au gaz, un dispositif de chauffage en ligne infrarouge ou un four électrique.

4. Système de formage (100) selon la revendication 3, dans lequel le dispositif de chauffage en ligne (414, 514) comprend l'aimant rotatif (428, 528), et dans lequel le corps creux intermédiaire (222, 322) est mobile le long d'un axe qui est parallèle à un axe de rotation de l'aimant rotatif (428, 528).

5. Système de formage (100) selon l'une quelconque des revendications 1 à 4, comprenant en outre un poste de trempe (116, 216) entre le poste d'assemblage (112, 212) et le poste d'hydroformage (104) qui est configuré pour tremper sélectivement le corps creux intermédiaire (222, 322).

6. Système de formage (100) selon l'une quelconque des revendications 1 à 5,
dans lequel le dispositif de commande est configuré pour commander le dispositif de chauffage en ligne (114, 214) de telle sorte que le dispositif de chauffage en ligne (114, 214) chauffe le corps creux intermédiaire (222, 322) à une température de 300 °C à 550 °C.

7. Procédé de formage d'un corps creux final (324) à partir d'une bande métallique (218), le procédé comprenant :
le profilage (102, 202) de la bande métallique (218) selon une section transversale souhaitée et de telle sorte que les bords longitudinaux (220) de la bande métallique (218) soient en butée ;
le soudage (112, 212) des bords longitudinaux (220) conjointement sous la forme d'une région de soudure (730) et pour former un corps creux intermédiaire (222, 322) ;
le chauffage (114, 214) d'au moins la région de soudure (730) du corps creux intermédiaire (222, 322) ;
l'hydroformage (104) du corps creux intermédiaire (222, 322) en corps creux final (324), **caractérisé en ce que**
le chauffage (114, 214) d'au moins la région de soudure (730) comprend le chauffage (114, 214) d'au moins la région de soudure (730) pendant une durée de plus de 0 seconde à 30 secondes et à une température de 250 °C à 550 °C.

8. Procédé selon la revendication 7, dans lequel la bande métallique (218) comprend un alliage d'aluminium de la série 6xxx.

9. Procédé selon la revendication 7 ou 8, comprenant en outre la trempe (116, 216) du corps creux intermédiaire (222, 322) avant l'hydroformage (104) du corps creux intermédiaire (222, 322) en corps creux final (324) ; et/ou
dans lequel le chauffage (114, 214) comprend le chauffage (114, 214) d'une partie de région sans soudure du corps creux intermédiaire (222, 322).

10. Procédé selon l'une quelconque des revendications 7 à 9, dans lequel le chauffage (114, 214) d'au moins la région de soudure (730) comprend le chauffage (114, 214) d'au moins la région de soudure (730) pendant une durée de plus de 0 seconde à 30 secondes et à une température de 300 °C à 550 °C ; et/ou dans lequel le chauffage (114, 214) d'au moins la région de soudure (730) comprend le chauffage (414, 514) avec au moins l'un parmi un aimant rotatif (428, 528), un dispositif de chauffage en ligne à induction (614), un dispositif de chauffage en ligne alimenté au gaz, un appareil de chauffage en ligne infrarouge ou un four électrique.

11. Procédé selon l'une quelconque des revendications 7 à 10, comprenant en outre la régulation d'au moins l'un parmi un gradient de dureté de la région de soudure (730) ou une résistance de la région de soudure (730) avant l'hydroformage (104) par régulation d'au moins l'une parmi une durée du chauffage (114, 214) de la région de soudure (730) ou une température du chauffage (114, 115) de la région de soudure (730).
